# EUROPEAN PATENT SPECIFICATION

(11) **EP 1 235 865 B1**
(45) Date of publication and mention of the grant of the patent: **15.09.2004**
(21) Application number: 00983175.1
(22) Date of filing: 27.11.2000
(51) Int. Cl.: C08F 10/00, C08F 4/69

(54) **TRIS-(3,5-DIMETHYLPYRAZOLYL)CHROMIUM BORATE DICHLORIDE AS COMPONENT OF CATALYTIC SYSTEMS FOR THE POLYMERIZATION OF OLEFINS AND POLYMERIZATION PROCESS USING IT**
KATALYSATORSYSTEM AUS TRIS-(3,5-DIMETHYLPYRAZOLYL)BORAT CHROMDICHLORID, VERFAHREN ZUR OLEFINPOLYMERISATION
DICHLORURE DE BORATE DE TRIS-(3,5-DIMETHYLPYRAZOLYL)CHROME COMME CONSTITUANT DE SYSTEMES CATALYTIQUES POUR LA POLYMERISATION D'OLEFINES ET PROCEDE DE POLYMERISATION UTILISANT CE COMPOSE

(30) Priority: 03.12.1999 IT MI992537
(43) Date of publication of application: 04.09.2002
(73) Proprietor: Polimeri Europa S.p.A., 72100 Brindisi (IT)
(72) Inventor: ROMANO, Anna, Maria, I-28100 Novara (IT); GRANDE, Manuela, I-13100 Vercelli (IT); SOMMAZZI, Anna, I-16038 Santa Margherita Ligure (IT); SANTI, Roberto, I-28100 Novara (IT)
(74) Representative: Coppo, Alessandro
(86) International application number: PCT/EP2000/011822
(87) International publication number: WO 2001/040322

(56) References cited:
- WO-A-97/17379
- WO-A-99/29739
- CHEMICAL ABSTRACTS, vol. 130, no. 3, 18 January 1999 (1999-01-18) Columbus, Ohio, US; abstract no. 25452, TANI, KAZUHIDE ET AL: "Chromium complexes for polymerization catalysts" XP002140125 & JP 10 287690 A (MITSUBISHI CHEMICAL INDUSTRIES LTD., JAPAN) 27 October 1998 (1998-10-27)
- CHEMICAL ABSTRACTS, vol. 129, no. 18, 2 November 1998 (1998-11-02) Columbus, Ohio, US; abstract no. 231170, TANI, KAZUHIDE ET AL: "Preparation of.alpha.-olefin polymers by the use of vanadium or chromium complex catalysts" XP002140126 & JP 10 231317 A (MITSUBISHI CHEMICAL INDUSTRIES LTD., JAPAN) 2 September 1998 (1998-09-02)

## Description

The present invention relates to a polymerization process of olefins consisting in polymerizing the olefin(s) in question in the presence of a catalytic system comprising tris-(3,5-dimethylpyrazolyl)chromium borate dichloride and a suitable cocatalyst.

It is known that olefins can be polymerized using soluble compounds of transition metals combined with organic derivatives of aluminum, either alkyl- or alkyl-halogen derivatives, or oxy-derivatives.

Typical compounds of transition metals (e.g. Ti, Zr, Hf) are those in which the metal is complexed with a polydentate organic ligand, which does not participate in the polymerization reaction but contributes to blocking some of the coordination sites of the metal, the others being occupied by ligands which are released at the right moment for making the coordination site available for the polymerization reaction.

With reference to these complexes, patent application WO 97/17379 expressly indicates ligands such as hydride-tris(pyrazolyl)borates or cyclopentadienyls which complex metals such as titanium and zirconium.

This patent application, in turn, refers to catalysts for the polymerization of olefins comprising a component consisting of a metal complexed by pyrazolyl groups substituted in position 3 by organic radicals containing at least three carbon atoms and attributes to these catalytic systems the property of modifying (or predetermining) the molecular weight distribution of the polymerization reaction products, thus disclosing an advantage with respect to the complexes of the known art (e.g. EP 482,931; U.S. 5,312,794).

The catalytic system according to patent application WO 97/17379, however, seems to be limited only to the use of methylaluminoxane as cocatalyst which, in turn, combined with complexes of chromium in accordance with the definition mentioned above, does not seem to be particularly effective in the polymerization of ethylene.

WO-A-9929739 discloses tris-(3,5-dimethylpyrazolyl)chromium borate dichloride complex as component of a catalytic system and a process for the polymerization of ethylene using said component and a cocatalyst selected among aluminoxane, aiuminum alkyl, aluminum alkyl halide and ionizing noncoordinating anion precursor compounds. It is specifically disclosed only the combination of the above complexes with aluminoxane (MAO).

JP 10287690 (Abstract) and JP 10231317 (Abstract) refer to a process of polymerization using hydrotris(pyrazolyl)chromium borate and a typical cocatalyst consisting of a ionizing compound in presence of an aluminum alkyl.

The Applicant has now found that a particular pyrazolyl complex of chromium can be used as component of catalytic systems for the polymerization of olefins with all the advantages and without the limits of the analogous compounds described in the art mentioned above.

In fact, it has been found that using a component of catalytic systems for the polymerization of olefins consisting of tris-(3,5-dimethylpyrazolyl)-chromium borate dichloride combined with a suitable compound of aluminum, the preparation of polymers of olefins with a good productivity is favoured, these polymers being characterized by a low poly-dispersion.

An object of the present invention therefore relates to a process for the preparation of polymers and copolymers of olefins which comprises polymerizing at least one olefin in the presence of a catalytic system comprising:
a) tris-(3,5-dimethylpyrazolyl)chromium borate dichloride, and
b) a cocatalyst consisting of an aluminum alkil halide
in which the alkyl group contains from 1 to 6 carbon atoms.

The cocatalyst is generally used in such quantities that the molar ratio Al/Cr ranges from 10 to 5000, preferably from 10 to 1000.

According to the process object of the present invention, the catalytic system described above, as already mentioned, comprises as cocatalyst, an aluminum alkyl-halide in which the alkyl group contains from 1 to 6 carbon atoms, for example aluminum diethylchloride, in such quantities as to give the molar ratio Al/Cr specified above: of all these, the use of aluminum diethylchloride has proved to be particularly effective.

The term "α-olefins", as used in the present description and claims, essentially refers to ethylene, propylene, 1-butene, 4-methyl-1-pentene, 1-hexene, 1-octene.

The catalytic system of the process object of the present invention can be used in suspension processes at low, medium or high pressure and at temperatures ranging from 0 to 300°C. Alternatively, it can be used in solution processes, in the presence of an inert diluent such as toluene, operating at pressures ranging from 1 to 150 bar and at temperatures ranging from 0-100°C.

Some illustrative but non-limiting examples are provided hereunder for a better understanding of the present invention and for its embodiment.

Hereafter tris-(3,5-dimethylpyrazolyl)chromium (III) borate dichloride is referred to as Tp*CrCl₁. The structure of this compound is the following:

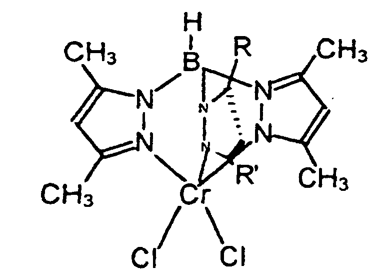

### Example 1

### Synthesis of tris-(3,5-dimethylpyrazolyl)chromium (III) borate dichloride Tp*CrCl₂ from tris-(3,5-dimethylpyrazol-yl)potassium borate (Tp*K) and CrCl₃•6H₂O

0.500 g of CrCl₃•6H₂O (MW = 266; 1.87*10⁻³ moles) in 150 ml of methanol are put into a flask and a suspension of 0.630 g of Tp*K (MW = 316; 1.87*10⁻³ moles) in 50 ml of methanol are then added. After 1 night, the solvent is evaporated, chloroform is added and the mixture is filtered. 0.74 g of green complex are obtained. (Yield: 47%)
mass (negative ions): 419
elemental analysis: Cl 16.53% (calc. 16.88%); Cr 12.01% (calc. 12.38%).

### Example 2

### Synthesis of tris-(3,5-dimethylpyrazolyl)chromium (III) borate dichloride Tp*CrCl₂ from Tp*T1 and CrCl₃•6H₂O

0.501 g of Tp*T1 (MW = 501; 1*10⁻³ moles) in 150 ml of ethanol are put into a flask equipped with a cooler and 0.267 g of CrCl₃•6H₂O (MW = 266; 1*10⁻³ moles) are added. The mixture is refluxed for 30 minutes. The solvent is evaporated and ethyl ether is added and after filtering the TlCl and evaporating the solvent, 0.355 g of green complex are obtained.
(Yield: 85%)
mass (negative ions): 419
EPR: only Cr (III)

### Comparative example 3

11.6 mg of Tp*CrCl₂, prepared as described in example 1 (MW = 420; 2.7*10⁻⁵ moles) and 30 ml of degassed, anhydrous toluene are introduced, under argon, into a 100 ml four-necked flask equipped with a cooler. 1 ml of MAO 1.57 M (55 eq.) is added to the green suspension. The yellow solution obtained is put under ethylene and heated to 55°C for 2 hours. The formation of the polymer is observed on the walls of the reactor. The solution is treated with methanol and HCl 6N. After filtration, washing and drying, 0.603 g of polymer are obtained.
Activity = 22.07 gPE/1 mmole of Cr

| Tm (°C) | Mw | Mw/Mn |
|---|---|---|
| 135.3 | 344185 | 9.89 |

### Comparative example 4

6.4 mg of Tp*CrCl₂, prepared as described in example 2 (MW = 420; 1.5*10⁻⁵ moles) and 30 ml of degassed, anhydrous toluene are introduced, under argon, into a 100 ml four-necked flask. 8 ml of MAO 1.57 M (400 eq.) are added to the green suspension. The yellow solution obtained is put under ethylene and maintained at room temperature for 2 hours. The polymer is formed on the walls of the reactor. The solution is treated with methanol and HCl 6N. The polymer, after filtration, washing with acetone and drying, weighs 0.53 g.
Activity = 34.70 gPE/mmole Cr

| Tm (°C) | Mw | Mw/Mn |
|---|---|---|
| 135.5 | 294730 | 5.07 |

### Comparative example 5

12.6 mg of Tp*CrCl₂, prepared as described in example 1 (MW = 420; 3*10⁻³ moles) and 30 ml of degassed, anhydrous toluene are introduced, under argon, into a 100 ml four-necked flask equipped with a cooler. 1.65 ml of MgBu₂ 1 M (55 eq.) are added to the green suspension. The solution, put under ethylene, is heated to 55°C for 2 hours. The solution is treated with methanol and HCl 6 N. After extraction with methylene chloride and evaporation of the solvent, 0.243 g of polymer are obtained.
Activity = 8.10 g PE/mmole Cr

### Comparative example 6

2.8 mg of Tp*CrCl₂ (MW = 420; 6.2*10⁻⁶ moles), prepared as described in example 1 in 100 ml of degassed, anhydrous toluene are introduced, under argon, into a 250 ml four-necked flask. 2.5 ml of TIBAL 1 M (400 eq.) are added to the green solution. The yellow solution obtained is put under ethylene and maintained at room temperature for 2 hours. The suspension is treated with methanol and HCl 6N; the polymer, after filtration, washing with acetone and drying, weighs 0.12 g.
Activity = 19.38 gPE/mmole

### Comparative example 7

11.9 mg of Tp*CrCl₂, prepared as described in example 2 (MW = 420; 2.8*10⁻⁵ moles) and 30 ml of degassed, anhydrous toluene are introduced, under argon, into a 100 ml four-necked flask equipped with a cooler. 5.66 ml of MgBu₂ 1 M (200 eq.) are added to the green suspension. The solution, put under ethylene, is heated to 55°C for 2 hours. The solution, quenched with methanol and HCl 6 N, is extracted with methylene chloride to give, after evaporation of the solvent and drying, 0.255 g of polymer.
Activity = 9.00 g PE/mmole Cr

### Comparative example 8

6.4 mg of Tp*CrCl₂, prepared as described in example 2 (MW = 420; 1.5*10⁻⁵ moles) and 100 ml of degassed, anhydrous toluene are introduced, under argon, into a 250 ml four-necked flask. 0.3 ml of EtMgBr 1 M (20 eq.) are added to the green solution, put under ethylene. The yellow solution obtained is put under ethylene and maintained at room temperature for 1 hour. After treating the solution with HCl 6 N and methanol, no polymer is formed.
Activity = 0 g PE/mmole Cr

### Example 9

4.2 mg of Tp*CrCl₂, prepared as described in example 2 (MW = 420; 1*10⁻⁵ moles) and 100 ml of degassed, anhydrous toluene are introduced, under argon, into a 250 ml four-necked flask. 2.22 ml of Et₂AlCl 1.8 M (400 eq.) are added to the green solution. The yellow solution obtained is put under ethylene and maintained at room temperature for 2 hours. The polymer is formed on the walls of the reactor. The suspension is treated with methanol and HCl 6N; the polymer, after filtration, washing with acetone and drying, weighs 2.513 g.
Activity = 251.30 gPE/mmole Cr

| Tm (°C) | Mw | Mw/Mn |
|---|---|---|
| 137.5 | 336900 | 3.43 |

### Example 10

6.4 mg of Tp*CrCl₂, prepared as described in example 2 (MW = 420; 1.5*10⁻⁶ moles) and 100 ml of degassed, anhydrous cyclohexane are introduced, under argon, into a 250 ml four-necked flask. 2.50 ml of Et₂AlCl 1.8 M (400 eq.) are added to the green solution. The yellow solution obtained is put under ethylene and maintained at room temperature for 2 hours. The polymer is formed on the walls of the reactor. The suspension is treated with methanol and HCl 6N; the polymer, after filtration, washing with acetone and drying, weighs 0.355 g.
Activity = 23.66 gPE/mmole Cr

| Tm (°C) | Mw | Mw/Mn |
|---|---|---|
| 140.2 | n.d. | n.d. |

### Example 11

6.4 mg of Tp*CrCl₂, prepared as described in example 2 (MW = 420; 1.5*10⁻⁵ moles) and 90 ml of degassed, anhydrous toluene are introduced, under argon, into a 250 ml four-necked flask. 1.66 ml of Et₂AlCl 1.8 M (200 eq.) are added to the green suspension. The yellow solution obtained is put under ethylene and maintained at 25°C for 2 hours. The suspension is treated with methanol and HCl 6N; the polymer, after filtration, washing with acetone and drying, weighs 2.44 g.
Activity = 162.66 gPE/mmole Cr

| Tm (°C) | Mw | Mw/Mn |
|---|---|---|
| 133.5 | 2219995 | 3.13 |

### Example 12

6.4 mg of Tp*CrCl₂, prepared as described in example 2 (MW = 420; 1.5*10⁻⁵ moles) and 80 ml of degassed, anhydrous toluene are introduced, under argon, into a 250 ml four-necked flask. 0.46 ml of Et₂AlCl 1.8 M (55 eq.) are added to the green solution. The yellow solution obtained is put under ethylene and maintained at room temperature for 2 hours. The polymer is formed on the walls of the reactor. The suspension is treated with methanol and HCl 6N; the polymer, after filtration, washing with acetone and drying, weighs 1.332 g.
Activity = 88.80 gPE/mmole Cr

| Tm (°C) | Mw | Mw/Mn |
|---|---|---|
| 138.4 | 1021905 | 5.64 |

### Example 13

6.4 mg of Tp*CrCl₂, prepared as described in example 2 (MW = 420; 1.5*10⁻⁵ moles) and 30 ml of degassed, anhydrous toluene are introduced, under argon, into a 100 ml four-necked flask. 0.46 ml of Et₂AlCl 1.8 M (55 eq.) are added to the green suspension. The yellow solution obtained is put under ethylene and maintained at room temperature for 2 hours. The suspension is treated with methanol and HCl 6N; the polymer, after filtration, washing with acetone and drying, weighs 0.864 g and has a Tm of 128.5°C.
Activity = 57.60 gPE/mmole Cr.

### Example 14

6.4 mg of Tp*CrCl₂, prepared as described in example 2 (MW = 420; 1.5*10⁻⁵ moles) and 30 ml of degassed, anhydrous toluene are introduced, under argon, into a 100 ml four-necked flask equipped with a cooler. 0.46 ml of Et₂AlCl 1.8 M (55 eq.) are added to the green solution. The yellow solution obtained is put under ethylene and heated to 65°C for 2 hours. The suspension is treated with methanol and HCl 6N; the polymer, after filtration, washing with acetone and drying, weighs 0.410 g.
Activity = 26.91 gPE/l mole of Cr

| Tm (°C) | Mw | Mw/Mn |
|---|---|---|
| 126.9 | n.d. | n.d. |

### Example 15

6.4 mg of Tp*CrCl₂, prepared as described in example 2 (MW = 420; 1.5*10⁻⁵ moles) and 100 ml of degassed, anhydrous toluene are introduced, under argon, into a 250 ml four-necked flask. 0.17 ml of Et₂AlCl 1.8 M (20 eq.) are added to the green solution, which turns yellow. The yellow solution is put under ethylene and maintained at room temperature for 2 hours. The suspension is treated with methanol and HCl 6N; the polymer, after filtration, washing with acetone and drying, weighs 0.643 g.
Activity = 42.86 gPE/mmole Cr

| Tm (°C) | Mw | Mw/Mn |
|---|---|---|
| 137.2 | 1150203 | 2.05 |

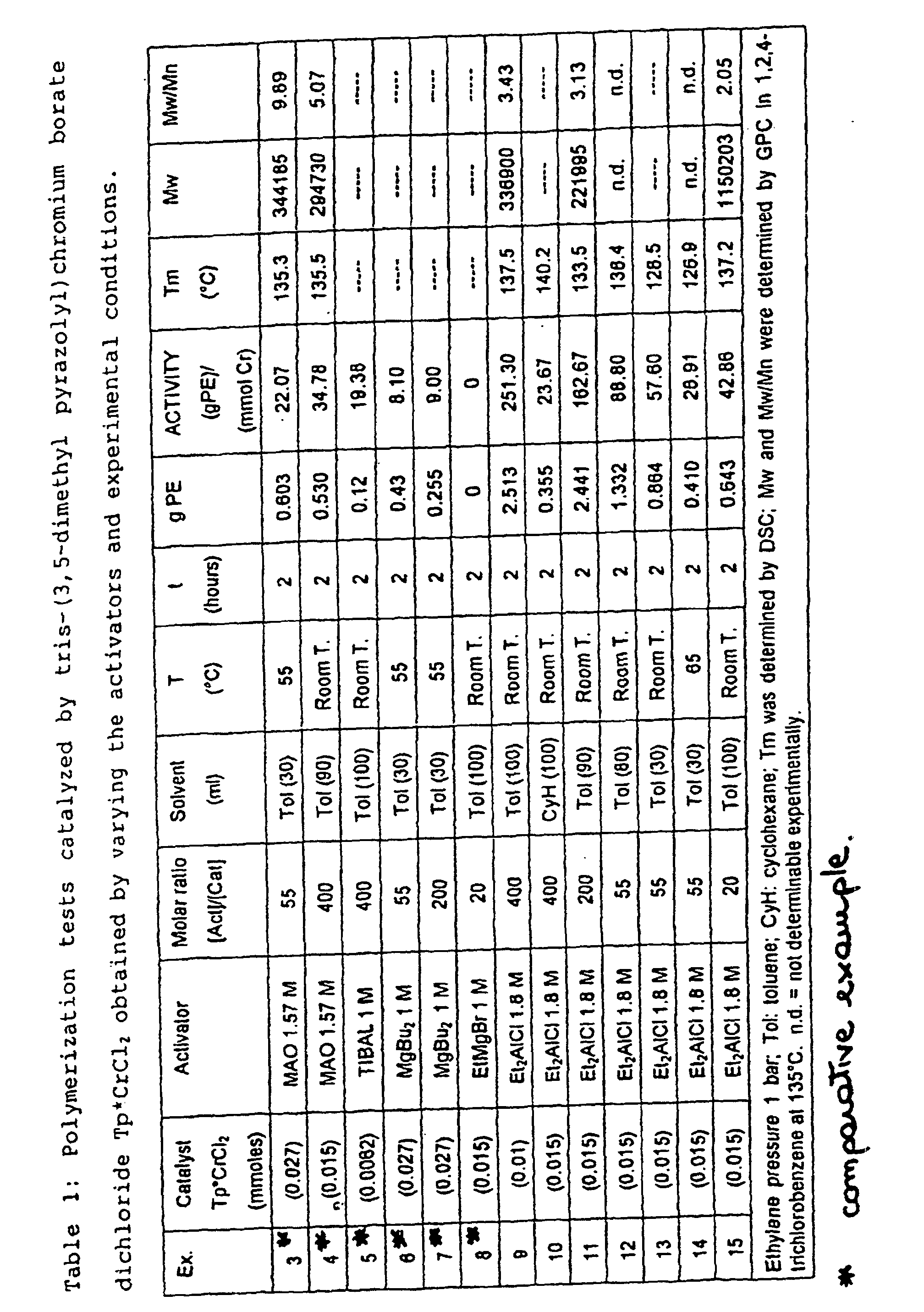

## Claims

1. A process for the (co)polymerization of olefins comprising polymerizing at least one olefin in the presence of a catalytic system comprising tris-(3,5-dimethylpyrazolyl)chromium borate dichloride and a co-catalyst consisting of an aluminum alkyl halide in which the alkyl group contains from 1 to 6 carbon atoms.

2. The process for the (co)polymerization of olefins according to claim 1 wherein the catalyst is aluminum diethyl chloride.

3. The process for the (co)polymerization of olefins according to claim 1, **characterized in that** the polymerization reaction is carried out in suspension at a temperature of up to 300°C.

4. The process for the (co)polymerization of olefins according to claim 1, **characterized in that** the polymerization reaction is carried out in solution at a temperature of up to 100°C.

5. The process for the (co)polymerization of olefins according to claim 4, **characterized in that** the polymerization reaction is carried out at a pressure ranging from 1 to 150 bar.

6. The process for the (co)polymerization of olefins according to any of the previous claims wherein the cocatalyst is used in such quantities that the Al/Cr ratio ranges from 10 to 5000.

## Patentansprüche

1. Verfahren zur (Co-)Polymerisation von Olefinen, umfassend das Polymerisieren von mindestens einem Olefin in Gegenwart eines katalytischen Systems, umfassend Tris-(3,5-dimethylpyrazolyl)chromboratdichlorid und einen Co-Katalysator, bestehend aus einem Aluminiumalkylhalogenid, in welchem die Alkylgruppe 1 bis 6 Kohlenstoffatome enthält.

2. Verfahren zur (Co-)Polymerisation von Olefinen nach Anspruch 1, worin der Katalysator Aluminiumdiethylchlorid ist.

3. Verfahren zur (Co-)Polymerisation von Olefinen nach Anspruch 1, **dadurch gekennzeichnet, dass** die Polymerisationsreaktion in Suspension bei einer Temperatur von bis zu 300 °C ausgeführt wird.

4. Verfahren zur (Co-)Polymerisation von Olefinen nach Anspruch 1, **dadurch gekennzeichnet, dass** die Polymerisationsreaktion in Lösung bei einer Temperatur von bis zu 100 °C durchgeführt wird.

5. Verfahren zur (Co-)Polymerisation von Olefinen nach Anspruch 4, **dadurch gekennzeichnet, dass** die Polymerisationsreaktion bei einem Druck im Bereich von 1 bis 150 bar durchgeführt wird.

6. Verfahren zur (Co-)Polymerisation von Olefinen nach einem der voranstehenden Ansprüche, worin der Co-Katalysator in solchen Mengen verwendet wird, dass das Al/Cr-Verhältnis im Bereich von 10 bis 5000 liegt.

## Revendications

1. Procédé pour la (co)polymérisation d'oléfines, comprenant la polymérisation d'au moins une oléfine en présence d'un système catalytique comprenant du dichlorure de tris-(3,5-diméthylpyrazolyl)chrome-borate et un co-catalyseur composé d'un halogénure d'alkylaluminium dans lequel le groupe alkyle contient 1 à 6 atomes de carbone.

2. Procédé pour la (co)polymérisation d'oléfines selon la revendication 1, dans lequel le catalyseur est le chlorure de diéthylaluminium.

3. Procédé pour la (co)polymérisation d'oléfines selon la revendication 1, **caractérisé en ce que** la réaction de polymérisation est réalisée en suspension, à une température allant jusqu'à 300°C.

4. Procédé pour la (co)polymérisation d'oléfines selon la revendication 1, **caractérisé en ce que** la réaction de polymérisation est réalisée en solution, à une température allant jusqu'à 100°C.

5. Procédé pour la (co)polymérisation d'oléfines selon la revendication 4, **caractérisé en ce que** la réaction de polymérisation est réalisée sous une pression dans la gamme de 1 à 150 bars.

6. Procédé pour la (co)polymérisation d'oléfines selon l'une quelconque des revendications précédentes, dans lequel le co-catalyseur est utilisé en quantités telles que le rapport Al/Cr est dans la gamme de 10 à 5 000.
